# EUROPEAN PATENT SPECIFICATION

(11) **EP 1 837 236 B1**
(45) Date of publication and mention of the grant of the patent: **06.08.2014**
(21) Application number: 07011944.1
(22) Date of filing: 13.11.2002
(51) Int. Cl.: B60R 1/12, B60R 11/04, B60R 1/00

(54) **Rearview mirror with built-in camera**
Rückblickspiegel mit eingebauter Kamera
Rétroviseur avec caméra incorporée

(30) Priority: 27.11.2001 JP 2001360300
(43) Date of publication of application: 26.09.2007
(62) Divisional of application: 02257840.5
(73) Proprietor: Murakami Corporation, Shizuoka-shi, Shizuoka (JP)
(72) Inventor: Misaiji, Takeshi, Toyota-shi, Aichi-ken, 471-8571 (JP); Oooka, Naoki, Fujieda-shi, Shizuoka (JP)
(74) Representative: Gill, Stephen Charles

(56) References cited:
- EP-A- 1 298 013
- FR-A- 2 776 596
- JP-A- 2001 322 492
- PATENT ABSTRACTS OF JAPAN vol. 2000, no. 09, 13 October 2000 (2000-10-13) & JP 2000 168440 A (SONY CORP), 20 June 2000 (2000-06-20)

## Description

The present invention relates to a rearview mirror with a built-in camera, which is applied to a side mirror or a front door mirror of a vehicle.

An exterior mirror mounted on the front side of a vehicle such as an automobile, especially the one on the passenger-seat side, a door mirror for example, is likely to have a dead angle zone in the area right under the door mirror to the vicinity of the front wheel side, thereby causing a poor field of view.

Japan Laid-Open Patent 2000-16181 (hereinafter referred to as the prior art 1) discloses a door mirror having a small camera which is installed inside a mirror housing and oriented toward the ground. Japan Laid-Open Patent 2000-62531 (hereinafter referred to as the prior art 2) discloses a door mirror having a small camera installed outside a mirror housing. Japan Laid-Open Patent 2000-168440 (hereinafter referred to as the prior art 3) discloses a door mirror having a small camera installed inside a mirror housing. Also Japan Laid-Open Patent 10-208198 (hereinafter referred to as the prior art 4) discloses a door mirror having a small camera which is installed inside a mirror housing and oriented toward the ground.

The door mirrors described in the prior arts improve a field of view with a small camera by monitoring of the front, side and rear as well as the lower portion of a vehicle.

The aforementioned conventional rearview mirrors, for example, one described in the prior art 1 has the problem that dirt is likely to stick to the exposed camera lens, even if a visor-like dirt protector is disposed in front of the lens relative to the vehicular traveling direction on the under surface of the mirror housing. It will lead to a deterioration of image acquisition performance and quality of acquired images, thereby making it impossible to maintain a high visibility over the long term. Furthermore, the exposed camera lens creates a large wind noise during vehicular travel.

The rearview mirror of the prior art 2 has also the problem that dirt is likely to stick to the camera lens since the camera is mounted on the external surface of the mirror housing. It will result in a deterioration of image acquisition performance and quality of the acquired image and make it impossible to maintain a high visibility over the long term.

The rearview mirror of the prior art 3 requires an accuracy for positioning of the camera with the opening made on the mirror housing during the camera installation, since the camera is firmly secured to the inner surface of the mirror housing. Thus, it will not only complicate the process while the camera is installed in the mirror housing but also require the installation of a transparent cover to close the opening of the housing at a different manufacturing step.

The rearview mirror of the prior art 4 presents the difficulty in assembling and disassembling of the camera and lens since both are installed in the mirror housing. Furthermore, when the mirror housing experiences damage, it will inevitably sacrifice the camera and lens. When the mirror housing is replaced, the camera and lens cannot be reused, which results in a cost increase in replacement.

The conventional camera built-in rearview mirrors are configured so that the edge of the opening is flush with that of the transparent cover. When it is used for the exterior mirror of a vehicle, for example, it is therefore likely to create a wind noise since the wind, which flows in the opposite direction of vehicular travel, is caught in the gap between the transparent cover and the opening.

It would be desirable to be able to provide a rearview mirror with a built-in camera, which presents the following features. The rearview mirror is capable of maintaining a long-term high visibility of the area covering at least the lower portion of a vehicle and the vicinity of the forward wheel by acquiring clear images. It allows the easier assembling and disassembling of the camera in the mirror housing and positioning of the camera with the opening. It protects against the dirt sticking to the lens and the occurrence of wind noise securely. Also when the mirror housing suffers from damages, the rearview mirror allows reuse of the camera, thereby contributing to a cost reduction in mirror housing replacement.

JP 2001 322492 A proposes a rearview mirror with a built-in camera having the features of the pre-characterising portion of claim 1.

According to the present invention there is provided a rearview mirror with a built-in camera according to claim 1.

The rearview mirror with a built-in camera presents the easier assembly such as assembling and dissembling of the camera in the mirror housing and positioning of the camera with the opening since the opening made on the mirror housing can be closed by the transparent cover while the camera is installed in the mirror housing. Replacement of the camera can be conducted easily since it is installed in the mirror housing attachably thereto or detachably therefrom. It also permits reuse of the camera, which is removed from the mirror housing when it is damaged. Since the lens having protection with the transparent cover is not exposed, it is possible to prevent soiling of the lens. In this way, a high visibility can be maintained over a long term by obtaining clearer images covering the lower portion of the vehicle and the vicinity of the front wheel.

The rearview mirror with a built-in camera according to the present invention allows the opening made on the mirror housing to be closed by the transparent cover while the camera is installed in the mirror housing. Positioning of the camera with the opening of the mirror housing can be conducted easily in parallel with closing of the opening with the transparent cover, and thereby assembling of the camera and transparent cover with the mirror housing can be much simplified.

The present invention still provides a rearview mirror with a built-in camera wherein a shielding element and a transparent cover surround the neighborhood of the lens of a camera to define a closed space.

The rearview mirror with a built-in camera improves visibility by rendering acquired images clearer since the undesired incident light is prevented from entering the camera lens. In addition, visibility deterioration due to soiling of the lens can be securely prevented since dust and water will not intrude the periphery of the camera lens. The transparent cover and the shielding element can prevent the light, which enters the opening of the mirror housing through the transparent cover, from leaking out of the gap between the mirror and the plane of opening of the mirror housing. On the other hand, the light entering the same gap will not penetrate the shielding element.

The present invention yet provides a rearview mirror with a built-in camera wherein a transparent cover and a shielding element are combined integrally.

The rearview mirror with a built-in camera allows mounting of the shielding element while the camera is being installed in the mirror housing or the opening of the mirror housing is being closed with the transparent cover. Thus, assembling of the shielding element into the mirror housing can be performed more easily.

The present invention further provides a rearview mirror with a built-in camera wherein a camera is supported elastically through a support element provided in a mirror housing.

The rearview mirror with a built-in camera enables absorption of the vibration transmitted to the camera from the mirror housing during vehicular travel with elastic support of the camera inside the mirror housing. It can prevent image blur caused by vibration of the camera. Serious damage of the expensive camera can be prevented since the protection of the camera is enhanced by an impact absorbing effect exerted by the elastic support of the camera, even if the mirror housing is damaged. Thus, visibility deterioration due to unclear images caused by the camera vibration during vehicular travel is prevented and reuse of the camera can be put into practice. A cost reduction can be attained since the monetary loss associated with mirror housing replacement is minimized. The camera module, the integrally combined camera and transparent cover, which is elastically secured in the mirror housing, absorbs the dimensional errors associated with the parts of the camera module, thereby improving the positioning accuracy.

The present invention still further provides a rearview mirror with a built-in camera wherein a gap is provided between a camera and a support element.

The rearview mirror with a built-in camera increases the elastic holding force at the fastening point between the camera module, the camera and transparent cover integrally combined, and the support element, thereby promoting elasticity of the support element and allowing the easier positioning of the camera module. And serious damage of the camera is prevented by the enhanced protection effect even if the mirror housing is damaged. With elastic support of the camera in the mirror housing, the vibration of the camera can be absorbed more efficiently. Thus, visibility deterioration due to unclear images caused by the camera vibration during vehicular travel can better be prevented.

The present invention yet further provides a rearview mirror with a built-in camera wherein a support element is made of a synthetic resin of plate-like shape.

The rearview mirror with a built-in camera increases the elastic holding force at the fastening point between the camera module, the camera and transparent cover integrally combined, and the support element assisted by elasticity of the support element, thereby promoting the elasticity of the support element and allowing the easier positioning of the camera module. With the protection effect against the shock acting on the camera enhanced by the gap between the camera and support element, serious damage of the camera can be prevented securely even though the mirror housing is damaged. Absorption of the camera vibration can be more efficiently performed with the elastic support of the camera in the mirror housing. Thus, visibility deterioration due to unclear images caused by the camera vibration during vehicular travel can much better be prevented.

As another feature, the present invention provides a rearview mirror with a built-in camera, wherein a plurality of luminous bodies are disposed on the under portion in a mirror housing, and wherein light of the luminous bodies irradiates an imaging area taken by a camera through a transparent cover.

The rearview mirror with a built-in camera enhances a visibility by improving the quality of acquired images while a vehicle passing through a tunnel or running at night, especially.

As still another feature, the present invention provides a rearview mirror with a built-in camera wherein a camera, a transparent cover and luminous bodies are integrated into a second camera module.

The rearview mirror with a built-in camera enables mounting of the luminous bodies and closing of the opening of the mirror housing with the transparent cover while installing the camera into the mirror housing. Positioning of the camera with the opening of the mirror housing can be performed easily in parallel with closing of the opening with the transparent cover. Thus, assembling of the camera, the transparent cover and the luminous bodies with the mirror housing will be more easily conducted. In addition, the rearview mirror enhances a visibility by improving the quality of acquired images while a vehicle passing through a tunnel or running at night, especially.

As yet another feature, the present invention provides a rearview mirror with a built-in camera, wherein a front edge of a transparent cover lying forward relative to a vehicle running direction is configured stepwise lower than a corresponding front edge of an opening, and a rear edge of the transparent cover lying backward relative to the vehicle running direction is configured stepwise higher than a corresponding rear edge of the opening.

The rearview mirror with a built-in camera , when it is used for a vehicle exterior mirror for example, can prevent a wind noise since a wind flowing in the opposite direction of vehicular travel is not caught in the gap between the transparent cover and the opening.

By way of example only, an embodiment of the invention will be described in greater detail with references to the accompanying drawings of which:
FIG.1 is a front view showing an example of mounting of the rearview mirror with a built-in camera on a door mirror vehicle according to the first embodiment, seeing from the vehicle rear.
FIG.2 is a plan view showing mounting of the rearview mirror on a door mirror vehicle.
FIG.3 is an enlarged cross-sectional side view showing mounting of the camera in the mirror housing taken along the line III - III in FIGS. 1 and 2.
FIG.4 is an enlarged cross-sectional side view showing mounting of the camera in the mirror housing taken along the line IV - IV in FIGS. 1-3.
FIG.5 is an enlarged exploded perspective view seeing from under showing the configuration before inserting of the camera into the mirror housing without the mirror.
FIG.6 is an enlarged exploded perspective view seeing from above showing the configuration after inserting of the camera into the mirror housing without the mirror.
FIG.7 is an enlarged cross-sectional side view showing mounting of the rearview mirror with a built-in camera in the mirror housing according to the second embodiment.

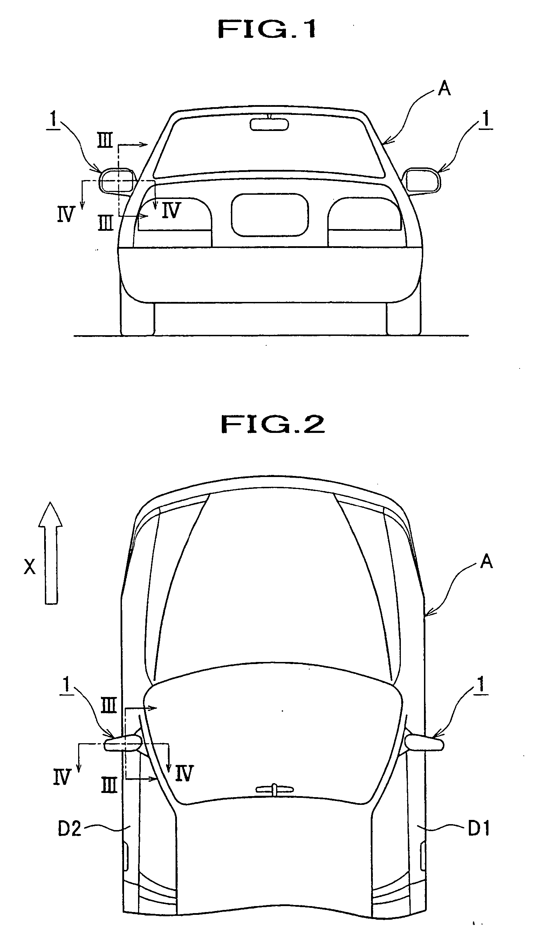

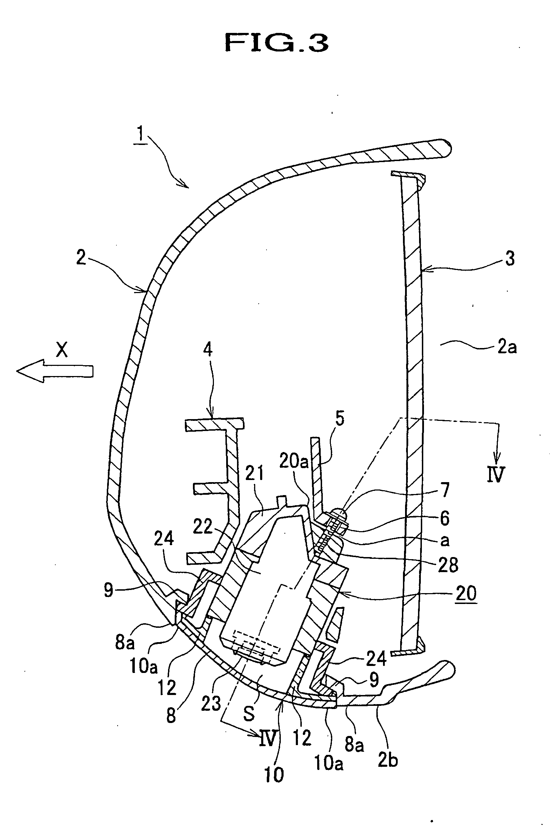

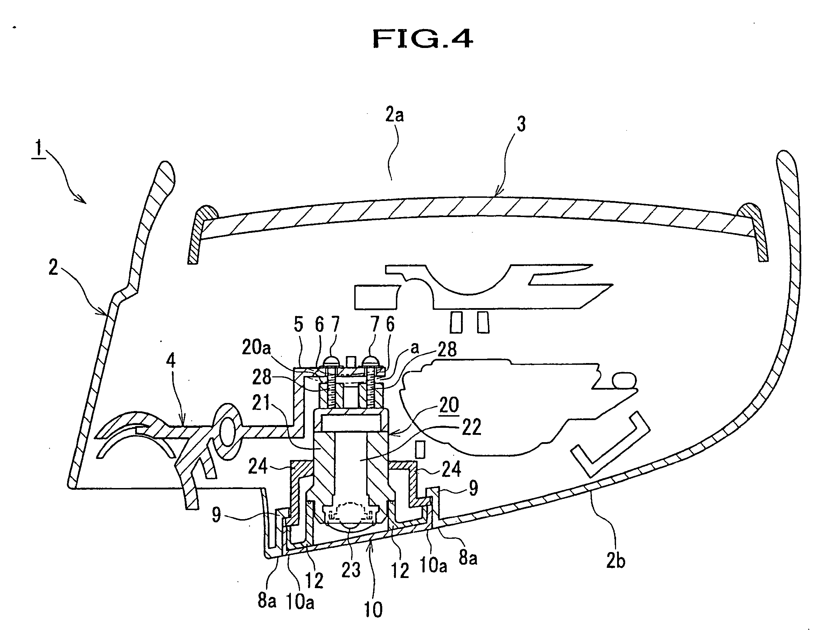

As shown in FIGS. 1 and 2, a door mirror 1 of the present invention is mounted on a front door D1 of driver seat and a front door D2 of passenger seat of a vehicle A, respectively. As shown in FIGS. 3 and 4, a mirror 3 is placed in a plane of the opening of a mirror housing 2 made of a synthetic resin. The mirror 3 is angle adjustably mounted to a support frame 4 attachably thereto and detachably therefrom, which is secured to the mirror housing by small screws. A support element 5, which is elastic and of a plate-like shape, extends integrally from the support frame 4. On the support element 5 is made a pair of through holes 6, through which a camera 20 to be described later is supported attachably and detachably with screws 7.

On an under portion 2b of the mirror housing 2 is made an opening 8, on inner periphery of which a support projection 9 is integrally formed. With the opening 8 is mated a transparent cover 10 made of a synthetic resin, a ridge 10a of which is held by the support projection 9. Thus, the opening 8 can be closed by the transparent cover 10 approximately flush with the under portion 2b.

As shown in FIG.3, a front portion of the ridge 10a of the transparent cover 10, which lies forward relative to a direction X of vehicular travel, is formed lower stepwise than a corresponding front portion of an edge 8a of the opening 8. On the other hand, a rear portion of the ridge 10a, which lies backward relative to the direction X of vehicular travel, is formed higher stepwise than a corresponding rear portion of the edge 8a. Thus, even if there is a gap between the edge 8a and the ridge 10a, the wind is prevented from being caught in the gap when a wind pressure in the opposite direction of vehicular travel exists, and thereby a wind noise is eliminated.

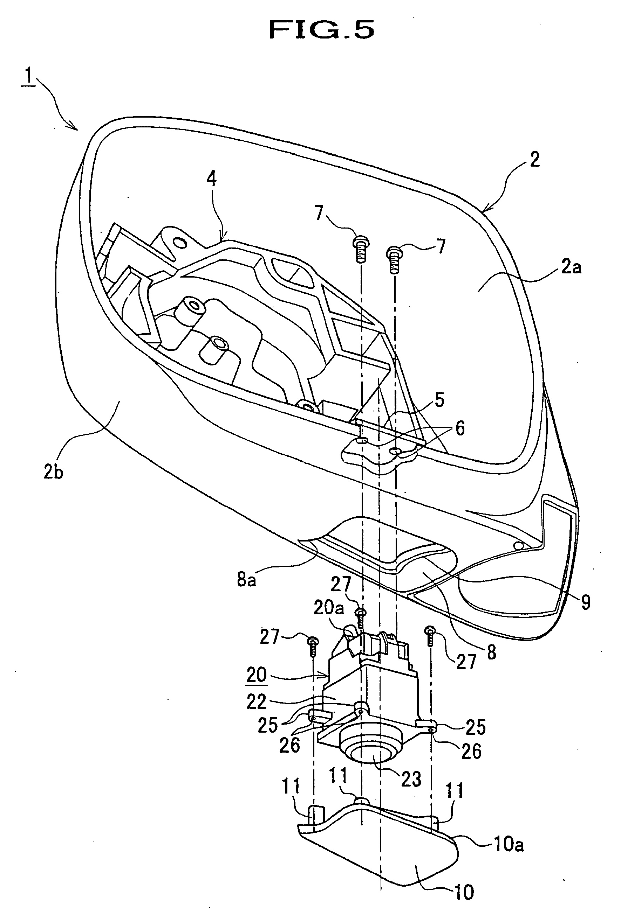

As shown in FIG. 5, a plurality of threaded holes 11 for the camera 20 are provided at the respective corners of the inner surface of the transparent cover 10. And a shielding element 12 which has a black colored cylinder-like shape is integrally formed by molding on the inner surface of the transparent cover 10. The shielding element 12 and the transparent cover 10 surround a lens 23 of a CCD camera 22 to define a closed space S.

The shielding element 12 prevents not only undesired light from entering the lens 23 of the CCD camera 22 but also dust and water from intruding into the neighborhood of the lens 23 in collaboration with the transparent cover 10. It improves image clearness and prevents deterioration of a field of view due to unclear images caused by the soiled lens. The shielding element 12 is integrally formed to the transparent cover 10 by molding.

The camera 20 includes a holder 21 of a rectangular parallelepiped shape and the CCD camera 22 built in the holder 21. The lens 23 comprising, for example, a wide angle lens or a fish-eye lens sits on an end of the CCD camera 22. The camera 20 is held in the mirror housing 2 so that the lens 23 faces the opening 8. A plurality of support elements 24 are provided around the camera 20. Each of the support elements 24 is inserted through the opening 8 to be in contact with the support projection 9 and interposed between the support projection 9 and the ridge 10a of the transparent cover 10 when the opening 8 is closed with the transparent cover 10.

At each corner of the holder 21 of the camera 20 is provided a flange 25. A through hole 26 is provided for a flange 25 and a through hole 26 is aligned with a threaded hole 11 at each corner of the transparent cover 10. A screw 27 is fastened into a threaded hole 11 through a through hole 26, thereby enabling mounting of the transparent cover 10 on the camera 20 to integrate a camera module. On a top surface 20a of the camera 20 are made a pair of threaded holes 28, which are aligned with the pair of through holes 6 bored on the support element 5 that is formed integrally on the support frame 4, when the camera module is temporarily assembled into the mirror housing 2.

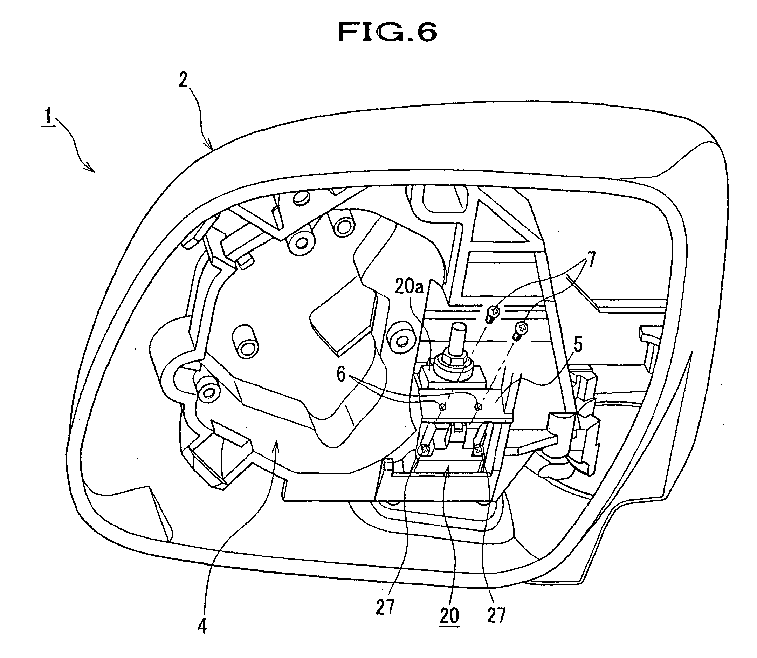

Steps for mounting the camera 20 in the mirror housing of the door D1 will be described referring to FIGS. 5 and 6. First as shown in FIG.5, a threaded hole 11 of the transparent cover 10 is aligned with a through hole 26 of a flange 25, fastened with a screw 27 and thereby the camera module, camera 20 and transparent cover 10 combined integrally, is assembled. This camera module is subsequently inserted into the mirror housing 2 through the opening 8 from outside. Then the support elements 24 of the camera 20 shown in FIGS.3 and 4 are supported by the support projection 9 and the ridge 10a of the transparent cover 10. This will complete temporary mounting of the camera module into the mirror housing 2. The top surface 20a of the camera 20 can hold a gap relative to the support element 5, and a through hole 6 of the support element 5 and a corresponding threaded hole 28 of the camera 20 are aligned.

As shown in FIG.3, a screw 7 is inserted through a through hole 6 and fastened into a corresponding threaded hole 28. Thus, the camera 20 is elastically held in the mirror housing 2 attachably thereto and detachably therefrom utilizing bending elasticity of the support element 5 as shown in FIG.4 with the two-dot chain line.

When the camera 20 is fastened to the support element 5 in the mirror housing 2, a screwdriver (not shown) is brought in through the plane of opening 2a of the mirror housing 2 while the mirror 3 is removed.

In the door mirror 1 described above, the opening 8 can be closed by the transparent cover 10 while the camera 20 is installed in the mirror housing 2. Also assembling such as mounting or removing of the camera 20 from the mirror housing 2 and positioning of the camera 20 with the opening 8 can be easily performed. It is possible to replace the camera 20 for the mirror housing 2 easily since the camera 20 is supported in the mirror housing 2 attachably thereto and detachably therefrom. In addition, when the mirror housing 2 is damaged, reuse of the camera 20 for a new mirror housing can be permitted by removing it. Since the camera 20 is supported elastically in the mirror housing 2, it is also possible to prevent so serious damage that spoils the chance of reuse. Further the elastic support absorbs the vibration transmitted to the camera 20 from the mirror housing 2, thereby eliminating image blur caused by vibration of the camera 20 during vehicular travel.

Elastic support at the fastening point between the support element 5 and the camera module made up of the camera 20 and the transparent cover 10 is enhanced assisted by the elasticity intrinsic to the support element 5. In this way, elasticity of the support element 5 is utilized to its best advantage and positioning of the camera module during assembly is rendered much easier.

When the camera 20 is fastened to the support element 5 with the screws 7, elasticity produced by bending displacement of the support element 5 itself can be advantageously used for assembling, since there is the gap at the fastening point between the support element 5 and the camera 20.

The transparent cover 10 and the shielding element 12 surround the lens 23 of CCD camera 22 to define a closed space, thereby preventing undesired light from entering the lens 23 and improving the quality of acquired images. It also protects against dust and water intruding into the neighborhood of the lens 23.

The transparent cover 10 and the shielding element 12 prevent the light entering the opening 8 through the transparent cover 10 from leaking through the gap 3a between the mirror 3 and the plane of opening 2a of the mirror housing 2.

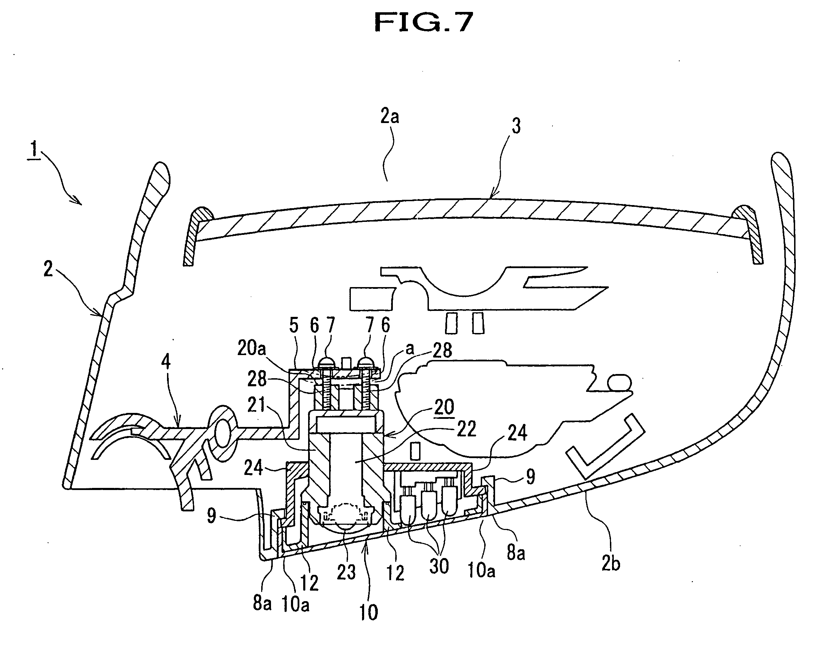

FIG.7 shows the rearview mirror with a built-in camera according to the second embodiment of the present invention. In the second embodiment, a plurality of luminous bodies 30 such as light emitting diodes (LEDs) are provided around the shielding element 12 of the first embodiment and the light emitted by the luminous bodies 30 is directed through the transparent cover 10 to an imaging area taken by the camera 20. Thus the quality of acquired images is much more improved, especially when the vehicle A is in a launching operation at night.

If the luminous bodies 30 are integrated with the camera 20 and the transparent cover 10, mounting of the camera 20 into the mirror housing 2 will complete both installation of the luminous bodies 30 and closing of the opening 8 with the transparent cover 10. Also positioning of the camera 20 with the opening 8 can be performed easily in parallel with closing of the opening 8 with the transparent cover 10. Therefore, the assembly of the camera 20, the transparent cover 10 and the luminous bodies 30 with the mirror housing 2 can be much easily conducted.

Descriptions have been made for a door mirror mounted on a passenger-seat side in the embodiments described before, but they are applicable to a door mirror mounted on a driver-seat side. While the invention has been described in detail and with reference to the door mirror as an exterior rearview mirror for example, it will be apparent to one skilled in the art that various changes and modifications can be made therein.

## Claims

1. A rearview mirror (1) with a built-in camera comprising:
a mirror housing (2);
a camera (20) having a lens (23) facing downward;
a transparent cover (10) for closing an opening (8) which said lens (23) of said camera (20) faces; and
a shielding element (12) and said transparent cover (10) surround a neighbourhood of said lens (23) of said camera (20) to define a closed space (S);
wherein said camera (20) and said transparent cover (10) are integrated into a camera module, and said camera module (20) is detachably mounted to said mirror housing (2);
**characterised in that**:
said mirror housing (2) includes an under portion (2b) in which said opening (8) is formed;
said lens (23) of said camera (20) faces downward through said opening (8);
said camera (20) is in said mirror housing (2) when said camera module is detachably mounted thereto;
said rearview mirror is a side mirror or a front door mirror of a vehicle; and
said shielding element (12) is integrally formed to said transparent cover (10) by molding.

2. A rearview mirror (1) according to claim 1 wherein said camera module is detachably mounted to said mirror housing (2) through said opening (8).

3. A rearview mirror (1) according to claim 1 or 2 wherein said camera (20) is supported elastically through a support element (5) provided in said mirror housing (2).

4. A rearview mirror (1) according to claim 3 wherein a gap (a) is provided between said camera (20) and said support element (5).

5. A rearview mirror (1) according to claim 3 or claim 4 wherein said support element (5) is made of a synthetic resin of plate like shape.

6. A rearview mirror (1) according to any one of claims 1 to 5,
wherein a plurality of luminous bodies (30) are disposed on said under portion (2b) in said mirror housing (2), and
wherein light of said luminous bodies (30) irradiates an imaging area taken by said camera (20) through said transparent cover (10).

7. A rearview mirror (1) according to claim 6 wherein said camera module further includes said luminous bodies (30).

8. A rearview mirror (1) according to any one of claims 1 to 7 wherein a front edge of said transparent cover (10) lying forward relative to a vehicular travelling direction is configured stepwise lower than a corresponding front edge of said opening (8), and a rear edge of said transparent cover (10) lying backward relative to the vehicular travelling direction is configured stepwise higher than a corresponding rear edge of said opening (8).

## Patentansprüche

1. Rückspiegel (1) mit eingebauter Kamera, der Folgendes umfasst:
ein Spiegelgehäuse (2);
eine Kamera (20) mit einer nach unten gerichteten Linse (23);
eine transparente Abdeckung (10), um eine Öffnung (8) zu schließen, auf die die Linse (23) der Kamera (20) gerichtet ist; wobei
ein Schutzelement (12) und die transparente Abdeckung (10) die Umgebung der Linse (23) der Kamera (20) umgeben, um einen abgeschlossenen Raum (S) zu definieren;
wobei die Kamera (20) und die transparente Abdeckung (10) in ein Kameramodul integriert sind und das Kameramodul (20) abnehmbar an dem Spiegelgehäuse (2) angebracht ist;
**dadurch gekennzeichnet, dass**:
das Spiegelgehäuse (2) einen unteren Abschnitt (2b) umfasst, in dem die Öffnung (8) ausgebildet ist;
die Linse (23) der Kamera (20) nach unten durch die Öffnung (8) gerichtet ist;
die Kamera (20) sich in dem Spiegelgehäuse (2) befindet, wenn das Kameramodul abnehmbar an diesem befestigt ist;
der Rückspiegel ein Seitenspiegel oder ein an der Vordertür eines Fahrzeugs angebrachter Spiegel ist; und
das Schutzelement (12) durch Formen einstückig an der transparenten Abdeckung (10) angeformt ist.

2. Rückspiegel (1) nach Anspruch 1, worin das Kameramodul durch die Öffnung (8) abnehmbar an dem Spiegelgehäuse (2) angebracht ist.

3. Rückspiegel (1) nach Anspruch 1 oder 2, worin die Kamera (20) durch ein in dem Spiegelgehäuse (2) bereitgestelltes Trägerelement (5) elastisch gelagert ist.

4. Rückspiegel (1) nach Anspruch 3, worin zwischen der Kamera (20) und dem Trägerelement (5) ein Abstand (a) bereitgestellt ist.

5. Rückspiegel (1) nach Anspruch 3 oder 4, worin das Trägerelement (5) aus einem plattenähnlich geformten Kunstharz besteht.

6. Rückspiegel (1) nach einem der Ansprüche 1 bis 5, worin eine Vielzahl an Leuchtkörpern (30) auf dem unteren Abschnitt (2b) in dem Spiegelgehäuse (2) angeordnet ist und
worin das Licht der Leuchtkörper (30) einen Bildbereich, der durch die Kamera (20) erfasst wird, durch die transparente Abdeckung (10) erleuchtet.

7. Rückspiegel (1) nach Anspruch 6, worin das Kameramodul ferner die Leuchtkörper (30) umfasst.

8. Rückspiegel (1) nach einem der Ansprüche 1 bis 7, worin eine Vorderkante der transparenten Abdeckung (10), die in Bezug auf die Fortbewegungsrichtung des Fahrzeugs vorne liegt, abgestuft tiefer ausgebildet ist als eine entsprechende Vorderkante der Öffnung (8) und eine Hinterkante der transparenten Abdeckung (10), die in Bezug auf die Fortbewegungsrichtung des Fahrzeugs hinten liegt, abgestuft höher ausgebildet ist als eine entsprechende Hinterkante der Öffnung (8).

## Revendications

1. Rétroviseur (1) avec une caméra incorporée comprenant:
un boîtier de rétroviseur (2) ;
une caméra (20) ayant un objectif (23) orienté vers le bas ;
un couvercle transparent (10) pour fermer une ouverture (8) à laquelle ledit objectif (23) de ladite caméra (20) fait face ; et
un élément de protection (12) et ledit couvercle transparent (10) entourent un voisinage dudit objectif (23) de ladite caméra (20) afin de définir un espace clos (S) ;
dans lequel ladite caméra (20) et ledit couvercle transparent (10) sont intégrés dans un module de caméra, et ledit module de caméra (20) est monté de manière détachable sur ledit boîtier de rétroviseur (2) ;
caractérisé en ce qui :
ledit boîtier de rétroviseur (2) comprend une sous-partie (2b) dans laquelle ladite ouverture (8) est formée ;
ledit objectif (23) de ladite caméra (20) est orienté vers le bas à travers ladite ouverture (8) ;
ladite caméra (20) est dans ledit boîtier de rétroviseur (2) lorsque ledit module de caméra est monté de manière détachable sur ce dernier ;
ledit rétroviseur est un rétroviseur latéral ou un rétroviseur de portière avant d'un véhicule ; et
ledit élément de protection (12) est formé de manière solidaire sur ledit couvercle transparent (10) par moulage.

2. Rétroviseur (1) selon la revendication 1, dans lequel ledit module de caméra est monté de manière détachable sur ledit boîtier de rétroviseur (2) à travers ladite ouverture (8).

3. Rétroviseur (1) selon la revendication 1 ou 2, dans lequel ladite caméra (20) est supportée élastiquement à travers un élément de support (5) prévu dans ledit boîtier de rétroviseur (2).

4. Rétroviseur (1) selon la revendication 3, dans lequel un espace (a) est prévu entre ladite caméra (20) et ledit élément de support (5).

5. Rétroviseur (1) selon la revendication 3 ou la revendication 4, dans lequel ledit élément de support (5) est réalisé avec une résine synthétique en forme de plaque.

6. Rétroviseur (1) selon l'une quelconque des revendications 1 à 5,
dans lequel une pluralité de corps lumineux (30) sont disposés sur ladite sous-partie (2b) dans ledit boîtier de rétroviseur (2), et
dans lequel la lumière desdits corps lumineux (30) rayonne une zone d'image prise par ladite caméra (20) à travers ledit couvercle transparent (10).

7. Rétroviseur (1) selon la revendication 6, dans lequel ledit module de caméra comprend en outre lesdits corps lumineux (30).

8. Rétroviseur (1) selon l'une quelconque des revendications 1 à 7, dans lequel un bord avant dudit couvercle transparent (10) positionné vers l'avant par rapport au sens de déplacement du véhicule, est configuré plus bas, par palier, qu'un bord avant correspondant de ladite ouverture (8), et un bord arrière dudit couvercle transparent (10) qui est positionné vers l'arrière par rapport au sens de déplacement du véhicule est configuré plus haut, par palier, qu'un bord arrière correspondant de ladite ouverture (8).
